# EUROPEAN PATENT APPLICATION

(11) **EP 2 389 806 A2**
(43) Date of publication of application: **30.11.2011**
(21) Application number: 11167769.6
(22) Date of filing: 26.05.2011
(51) Int. Cl.: A01N 65/00, A01P 7/00, A01N 3/00, A01P 21/00, A01N 65/38, A01N 65/42, A01N 65/22, A01N 37/02, A01N 37/04

(54) **A natural composition for the treatment of plants, preparation and uses thereof**

(30) Priority: 26.05.2010 IT PI20100065
(71) Applicant: Rao, Sebastiano, 18038 Sanremo (IM) (IT)
(72) Inventor: Rao, Sebastiano, 18038 Sanremo (IM) (IT)
(74) Representative: Turini, Laura

(57) **Abstract**

This invention relates to a composition essentially consisting of ingredients of natural origin for the preventive treatment of plant species such as crops, plants and vegetables.

Said composition has proven to be particularly useful in preventing and/or treating attacks by various types of harmful infesting agents, such as fungi, bacteria, viruses, insects and aphids; said composition has also proven useful in strengthening the plants natural defences and promoting the growth thereof.

## Description

### Technical Field of the Invention

This invention relates to a composition essentially consisting of natural ingredients for the preventive and/or therapeutic treatment of plant species such as crops, plants and vegetables.

Said composition has in fact proven to be particularly useful in preventing and/or treating the attacks by harmful infesting agents, such as fungi, bacteria, viruses, insects and aphids; said composition has also proven useful in strengthening the plants natural defences and prompting the growth thereof.

### Background Art

As is well known in the field, the issue of defending plants, such as crops, horticultural plants, fruit plants and ornamental plants, whether indoor or outdoor ones, from the attack of harmful infesting organisms that are the source of a high number of diseases, which are often fatal to the plant, is not easy to resolve.

This is attested by the fact that a very high number of so-called "phytopharmaceuticals" or "plant protection products", primarily of synthetic origin and with varying strengths and specificity and selectivity of action, have been developed over the years.

Unfortunately, the levels of toxicity and residual build up in the plants and the land by synthetic phytopharmaceuticals is all too often high/too high, thus making their use problematic in terms of the risk for both the consumer and the environment.

In addition, the infesting foreign organism often successfully develops resistance to the "pharmaceutical", thus forcing the user to use ever increasing doses, with all the consequent toxicity and environmental problems.

To eliminate this problem, products that are at least partially of natural origin have recently begun to be developed. Nevertheless, while these products are either non-toxic or have low levels of toxicity, they present a series of disadvantages that are, among other things, essentially due to their relatively low efficacy, shelf life and ease of use compared to the most popular synthetic plant protection products.

### Technical Problem

There is strong desire in the field to develop a composition that is essentially of natural origin and is non-toxic to both man and the environment, with an acceptable strength of action, applicability for as broad a range of plants as possible and improved, or at least similar, ease of application to that of products in common use.

The purpose of this invention is to adequately meet the aforementioned needs.

### Disclosure of the Invention

The Applicant has unexpectedly found that by treating a high number of plants with a suitable composition based on a suitable and specific mixture of active ingredients of natural origin, an adequate solution to the technical problem arising from the aforementioned needs has been found.

One aim of this invention is a composition for the preventive and therapeutic treatment of any plant, based on at least a mixture of specific active ingredients of natural origin consisting of at least one substance having antibiotic activity, at least one substance having fungicidal and/or repellent activity against harmful infesting organisms and at least one substance able to prevent such organisms from coming into contact with the oxygen of the surrounding air, wherein said composition also includes a suitable emulsifying agent, as per the attached independent claim.

An additional aim of this invention is to set out a method for the preparation of the aforementioned composition, as set out in the attached independent claim.

A further aim of this invention is the use of the aforementioned composition for the prevention and treatment of plant diseases, as set out in the attached independent claim.

Other aims of this invention are described in the attached dependent claims.

### Detailed Description of the Invention

This invention is for a composition for the preventive and/or therapeutic treatment of plants against the attack of harmful infesting agents/organisms and comprises at least a mixture of active ingredients of natural origin, wherein said mixture comprises:
- at least one substance having antibiotic activity, selected from the various types of garlic;
- at least one substance having fungicidal and/or repellent activity against harmful infesting organisms, selected from the various types of hot pepper; and
- at least one substance that is able to prevent said infesting organisms from coming into contact with the oxygen of the surrounding air, said substance being a vegetable oil selected from the group comprising: olive oil and/or rape oil and/or sunflower oil and/or corn oil and/or pumpkin seed oil and/or mixed seed oil and/or mixtures thereof;
   wherein said composition also includes an effective amount of emulsifying agent selected from the group comprising whole egg and/or egg yolk, either fresh and/or in powdered form, either freeze-dried or non-freeze-dried, soy lecithin, mustard seed lecithin, Acemulgor LAMveg^{®}, pure cholesterol, CREMOPHOR RH40^{®}, polysorbate, glyceryl monostearate, glycol distearate, polyoxyethylene monostearate, Lanette N^{®} (Cetearyl Alcohol /Sodium Cetearyl Sulphate), cetylstearylglucoside and methyl glucose sesquistereate.

In a particularly preferred realization of this invention, the emulsifying agent to be used is that selected from the group comprising whole egg and/or egg yolk, fresh and/or in powder form, either freeze-dried or non-freeze-dried.

The composition pursuant to the above-described invention should preferably be prepared in the form of a final oil-in-water concentrated emulsion.

In the above-described composition, consisting of the aforementioned mixture of active ingredients:
- said at least one substance having antibiotic activity, garlic, is present in a amount of between 10 and 300 g per litre of final concentrated emulsion; preferably between 10 and 200 g/l; even more preferably, between 20 and 80 g/l; even more preferably, between 25 and 70 g/l; even more preferably, between 30 and 60 g/l;
- said at least one substance having fungicidal and/or repellent activity, hot pepper, is present in a amount of between 10 and 300 g per litre of final concentrated emulsion; preferably between 10 and 200 g/l; even more preferably, between 20 and 80 g/l; even more preferably, between 25 and 70 g/l; even more preferably, between 30 and 60 g/l;
- said at least one substance able to prevent contact with oxygen in the air, vegetable oil as described above, is present in a concentration of between 25 and 300 g per litre of final concentrated emulsion; preferably between 50 and 210 g/l; more preferably, between 70 and 150 g/l; even more preferably, between 85 and 125 g/l.

In a particularly preferred realization of the invention, garlic is present in a concentration of between 35 and 50 g per litre of final concentrated emulsion; hot pepper is present in a concentration of 35 to 50 g per litre of final concentrated emulsion; vegetable oil is present in a concentration of between 90 and 115 g per litre of final concentrated emulsion.

In another particularly preferred realization of the invention, the amount of garlic falls between 50 and 180 g per litre of final concentrated emulsion;
- the amount of hot pepper falls between 50 and 180 g per litre of final concentrated emulsion;
- the amount of vegetable oil falls between 90 and 210 g per litre of final concentrated emulsion.

More specifically, in the composition according to the above-described invention:
- said at least one substance having antibiotic activity, garlic, is selected from the various types of garlic, of any origin and/or provenance, fresh and/or dried, crushed and/or powdered and/or granulated and/or macerated; preferably, garlic powder should be used;
- said at least one substance having fungicidal and/or repellent activity is selected, of any type (e.g. capsicum, chili pepper, paprika, Cayenne pepper, etc.), origin and/or provenance; preferably, grinded hot pepper powder should be used;
- said at least one substance able to prevent contact with the air, vegetable oil, is selected from the group comprising: olive oil and/or rape oil and/or sunflower oil and/or corn oil and/or pumpkin seed oil and/or mixed seed oil and/or mixtures thereof; more preferably, said vegetable oil is selected from olive oil and/or rape oil and/or sunflower oil and/or mixed seed oil and/or mixtures thereof; even more preferably, from rape oil and/or mixed seed oil and/or mixtures thereof.

Garlic, the intense and penetrating aroma of which may not always be liked, can also be used in protected form, i.e. covered, coated, encapsulated or microencapsulated by using methods and equipment that are well known in the pharmaceutical formulation field. In particular, said coating may be created by selecting a polymer film, from those available on the market, having technical characteristics that are suitable for the intended purpose. Advantageously, such coating/encapsulation (of granulated or powdered garlic for example), essentially eliminates the smell, protects the garlic from oxidation in contact with air and allows gradual release over time.

As for vegetable oils, used deep fryer waste oils may also be used following suitable treatment, such as the decanting of solid residues and filtering until a clear residue is achieved.

As previously described, the composition of the invention also includes a substance with emulsifying properties; this substance being preferably selected from the group comprising whole egg and/or egg yolk, either fresh and/or in powdered form, either freeze-dried or non-freeze-dried, soy lecithin, mustard seed lecithin, Acemulgor LAMveg^{®}, pure cholesterol, CREMOPHOR RH40^{®}, polysorbate, glyceryl monostearate, glycol distearate, polyoxyethylene monostearate, Lanette N^{®} (Cetearyl Alcohol/Sodium Cetearyl Sulphate), cetylstearylglucoside and methyl glucose sesquistereate.

Nevertheless, of the aforementioned emulsifying agents, the use of egg, i.e. whole egg and/or egg yolk, fresh and/or in powder form, freeze-dried or non-freeze-dried, is particularly preferred.

The egg amount used should preferably fall between 1/5 of a whole egg and 5 eggs per litre of final concentrated emulsion; more preferably, between 1/4 of a whole egg and 3 eggs/l; even more preferably, between 1/3 of a whole egg and 2 eggs/l.

In a particularly preferred realization of the invention, the amount of egg falls between 1/3 of a whole egg and 1 egg per litre of final concentrated emulsion.

These same ratios can essentially be used where egg yolk and/or powdered egg, such as freeze-dried egg, is used.

In another preferred realization, the composition of the invention also includes an additive consisting of at least one substance having disinfectant and/or antibacterial properties. Said substance is preferably selected from the group comprising silver, metallic and/or colloidal, e.g. ionic, and/or as silver oxide and/or as silver salt; and/or copper oxide and/or lime and/or limewash.

Said disinfectant and/or antibacterial substance should preferably be included in a amount of between 10 and 1000 g per litre of final concentrated emulsion; more preferably, between 50 and 500 g/l; even more preferably, between 100 and 200 g/l.

In a preferred realization of the invention, said disinfectant and/antibacterial substance is metallic silver.

In another realization of the invention, said disinfectant and/or antibacterial substance is, or at least includes, a portion of colloidal silver.

Colloidal silver, preferably ionic, can be used as is or can be generated in situ, e.g. by/when boiling water or in the metallic silver tisane as described in the examples below. However, the metallic silver can be converted, at least in part, into ionic colloidal silver by applying voltage to the pure metallic silver (999/1000) immersed in distilled or bidistilled water and/or in the tisane. Ionic colloidal silver is preferably present in the final composition in a amount of between 2 and 10 ppm; preferably between 3 to 7 ppm; more preferably, of around 5 ppm.

In a particularly preferred realization, the composition of the invention also comprises one or more additives having an adjuvant action in respect of the previously described active ingredients. Said additives are preferably selected from the group comprising balsamics and/or antiseptics, such as fresh and/or dried, whole or crumbled/powdered eucalyptus berries and/or leaves, or eucalyptus essential oil, thyme and/or its essential oil, neem; urticating substances, such as black and/or pink and/or white pepper, in berry and/or powder form; strengtheners, life improvers, purifiers, such as neem or *azadirachta indica* leaves and/or berries, and Bach flowers.

In addition, the composition of the invention may also comprise one or more excipients, surfactants, preservatives, stabilisers, viscosity enhancers, carriers, preferably selected from those known and in common use in the phytopharmaceutical field and dosed in accordance with the standard formulation field practice.

The preparation of the composition in accordance with the invention comprises at least one stage wherein a mixture of the preferential active ingredients as described above (and listed in the attached claims 1-5), suitably measured out and metered out, is dispersed/dissolved in a water-based liquid base, containing the desired additives, i.e. the desired disinfectant/antibacterial and/or adjuvant substances as set out above, and the resulting mixture is added to a suitable amount of egg and emulsified to achieve the desired final concentrated emulsion of the invention.

As clearly set out in the following examples, the aforementioned water-based liquid stage containing the additional disinfectant/antibacterial and/or adjuvant substances, in accordance with the foregoing description, comprises a tisane that is obtained by boiling in water, for 15 minutes to 2 hours on average, preferably for 30 minutes to 1 hour, said additional substances and then filtering the whole once cooled.

The desired amounts of active ingredients and the desired amount of egg, as previously set out in accordance with the methods as described in the following examples, are added to the tisane, and the resulting mixture is emulsified using techniques and equipment commonly used in the field.

Further amounts of adjuvants may be added to said concentrated emulsion (as specified by way of example in the examples) and/or moderate amounts of additional additives, such as strengtheners, stimulants and purifiers.

Furthermore, if necessary, preservatives such as sodium metabisulphite and/or potassium metabisulphite and/or lime and/or limewash can be added to treat more serious cases, as well as moderate amounts of other active ingredients commonly used in agriculture, such as basic copper acetate and/or sulphur.

As previously mentioned, the above operations normally take place in accordance with the methods and using the equipment as in common use in the plant protection formulation field.

Preparation examples of the concentrated emulsion pursuant to this invention are included below by way of a non-limiting example.

### EXAMPLE 1 (General)

5-15 g of eucalyptus leaves and berries, 2-8 g of peppercorns and 5-15 g of neem leaves and berries are added to 2 l of water together with 150 g of metallic silver.

The mixture is boiled for between 15 minutes and 2 hours, is left to cool and is then filtered using a tisane.

100-150 g of garlic powder and 100-150 g of grinded hot pepper powder are added to 2 1 of said tisane and left to macerate for between 12 hours and 2 days together with the silver, preferably the silver previously used for the tisane (although the same amount of fresh silver can also be used).

1 to 3 eggs are broken into 200-400 g of rape oil (or other vegetable oil, e.g. olive oil or mixed seed oil) and whisked. The mixture thus obtained is added to the aforementioned macerate and again whisked, adding more tisane to make up a total of 3 1 of concentrated emulsion.

Bach flowers (6 drops of "olive" to strengthen the plants, 6 drops of "hornbeam" to promote the growth of the plants, 6 drops of *"crab apple"* to purify the plants) are added to the concentrated emulsion to create the final concentrated emulsion.

### EXAMPLE 2

3 l of final concentrated emulsion are prepared, in accordance with the procedure as set out in General example 1, using:
- 6 g of eucalyptus, 4 g of hot pepper, 6 g of neem + 150 g of silver to prepare the tisane;
- 105 g of garlic, 105 g of hot pepper;
- 1 egg in 250 g of rape oil.

### EXAMPLE 3

3 l of final concentrated emulsion are prepared, in accordance with the procedure as set out in General example 1, using:
- 8 g of eucalyptus, 6 g of hot pepper, 7 g of neem + 150 g of silver to prepare the tisane;
- 110 g of garlic, 115 g of hot pepper;
- 2 eggs in 290 g of rape oil.

### EXAMPLE 4

3 l of final concentrated emulsion are prepared, in accordance with the procedure as set out in General example 1, using:
- 10 g of eucalyptus, 5 g of hot pepper, 10 g of neem + 150 g of silver to prepare the tisane;
- 120 g of garlic, 120 g of hot pepper;
- 1 egg in 300 g of rape oil.

### EXAMPLE 5

3 l of final concentrated emulsion are prepared, in accordance with the procedure as set out in General example 1, using:
- 12 g of eucalyptus, 8 g of hot pepper, 12 g of neem + 150 g of silver to prepare the tisane;
- 130 g of garlic, 135 g of hot pepper;
- 2 eggs in 350 g of rape oil.

### EXAMPLE 6

3 l of final concentrated emulsion are prepared, in accordance with the procedure as set out in General example 1, using:
- 13 g of eucalyptus, 8 g of hot pepper, 14 g of neem + 150 g of silver to prepare the tisane;
- 140 g of garlic, 140 g of hot pepper;
- 3 eggs in 290 g of rape oil.

### EXAMPLE 7

3 l of final concentrated emulsion are prepared, in accordance with the procedure as set out in General example 1, using:
- 15 g of eucalyptus, 8 g of hot pepper, 15 g of neem + 150 g of silver to prepare the tisane;
- 150 g of garlic, 150 g of hot pepper;
- 3 eggs in 400 g of rape oil.

As regards the use of the composition of the invention, on average 250 to 1000 ml of final concentrated emulsion are needed to produce 5 to 100 1 of ready-to-use product to be administered to the plants to be treated.

Preferably, on average 350 to 750 ml of final concentrated emulsion are needed to prepare 5 to 100 1 of ready-to-use product to be administered to the plants to be treated.

More preferably, on average 450 to 550 ml of final concentrated emulsion are needed to prepare 5 to 50 1 of ready-to-use product to be administered to the plants to be treated.

In a particularly preferred realization of the invention, on average 500 ml of final concentrated emulsion are needed to prepare 10 to 20 1 of ready-to-use product to be administered to the plants to be treated.

The method of treating plants essentially comprises at least one stage wherein an effective amount of a composition, prepared as previously described, is administered to said plants. Said administration takes place in accordance with the methods and equipment as known and in common use in agriculture and floriculture.

Said treatment should preferably include spraying crops and permanent crops in the cool evening hours. For instance, they can be treated in dry wood, from the renewed growth to the bud phase. Treatment should preferably be suspended during the flowering stage to promote pollinating insects, and recommenced immediately after flowering until the end of the plants production period.

On average, treatment intervals will vary from 1 day to one month; preferably from 2 days to 25 days; more preferably, from 4 days to 20 days. There are no latency periods between the treatment and the harvest.

The following diseases (with the relevant infesting species) are examples of the known diseases that the invention product is suitable for:
Fungi:
   - sooty mould (2 treatments, 5 days apart);
   - oidium or powdery mildew (2/3 treatments, 7 days apart);
   - scab (2/3 treatments, 7 days apart);
   - peach leaf curl (in dry wood and from leaf regrowth until the budding phase, suspend treatment during the flowering stage and recommence immediately thereafter; 1 treatment every 4 days until the fungus is completely eliminated from new growth. Treatment is however recommended immediately after summer rainfall, especially if of low intensity);
   - rust fungus (3/4 treatments, 7 days apart);
   - downy mildew (see peach leaf curl);
   - black rot (after removing infected branches, 1 treatment every 10 days in dry wood until the end of the growing period);
   - anthracnose (2 treatments, 10 days apart, suspend for 20 days, then administer 2 treatments, 15 days apart);
   - leaf spot (see anthracnose);
   - shot hole (see anthracnose).
Insects:
   - black scale, cottony cushion scale (2/3 treatments, 4 days apart);
   - olive scale (treatments every 7 days starting a month before maturity until the end of harvest);
   - San José scale (3/4 treatments, 4 days apart);
   - cherry fruit fly (treatments every 5 days from before the fruit changes colour until the end of harvest);
   - red spider mite (treatments every 5 days until their disappearance);
   - brown spider mite (treatments every 5 days until their disappearance);
   - ants (treatments every 4/5 days);
   - metcalfa, oblong scale (treatments every 4 days until their disappearance);
   - whitefly, bemisia tabaci (treatments every 4 days until their disappearance);
   - tuta absoluta (prevention, 1 treatment twice weekly, defence, every 4 days until their disappearance);
   - anarsia (treatments every 4 days until their disappearance);
   - vine/olive/ermine moth (treatments every 4 days until their disappearance).
Aphids (plant lice)
   - black cherry aphid (3/4 treatments, 5 days apart);
   - woolly aphid (2/3 treatments, 4 days apart);
   - rosy apple aphid (4/5 treatments, 4 days apart);
   - greenfly (3/4 treatments, 4 days apart);
   - other aphids (4/5 treatments, 4 days apart);
Bacterial infections
   Prevention: one treatment every 20 days.
   Defence: one treatment every 7 days from the start of growth until the end of the plants production cycle and suspend during flowering.

Twice-weekly preventive treatments may be administered to all crops and permanent crops.

The mixture of active ingredients of this invention has proven to be particularly successful both when used for preventive purposes to protect plants from the attack of harmful infesting agents and/or organisms and when used therapeutically to treat diseases caused by such harmful infesting organisms.

In particular, the association of preferred active ingredients relating to this invention has been found to have an entirely unexpected synergy of action as compared to the known action of the individual active ingredients.

Known for its antibiotic properties, the active ingredients of garlic (alliin and allicin) have little resistance and stability. Hot pepper, on the other hand, has fungicidal properties, which are however associated with a certain causticity of the product. Oil tends to create a membrane around microbes, bacteria and parasites causing their death by asphyxia.

The marriage of the three active ingredients has significantly increased their antiviral, antibacterial and pesticidal properties while unexpectedly also increasing the stability, and thus the duration of the effect, causing the death of larvae, parasites and aphids on contact and creating an urticant environment that is fairly unfavourable to ants and whiteflies.

The composition of the invention has also been shown to unexpectedly promote the slow release of its active ingredients, thus promoting the increased duration of the action.

The composition of the invention has also, again unexpectedly, been proven to act as an excellent foliar fertilizer, thus improving the aesthetic appearance of leaves as well as strengthening the plants natural defences and promoting the growth thereof.

By way of a non-limiting example of the broad application potential of the invention, the composition of the invention has proven to be particularly useful in the preventive and therapeutic treatment of plant species such as crops, vegetables, various types of plant, including indoor and outdoor ornamental plants.

In any case, it was also found, completely unexpectedly, that the composition of the invention is also suitable for treating the soil (e.g. for the cultivation of asparagus, potatoes, carrots, onions, Jerusalem artichokes, etc.) In this case, it is preferable to omit from the preparation the egg, and also possibly/preferably the oil.

The larvae that feed on the roots and/or compost and the fungi that attack the roots of the plants were thus successfully fought.

Additionally, when treating plants whose fruits do not need to be glossy, e.g. grapes, plums and bilberry, which have a satinized appearance, the amount of oil in the emulsion should be reduced to a minimum; for example, to up to 10% of the amount normally used (i.e. it is recommended that 20 ml be used instead of 200 ml).

By way of a non-limiting example, a non-exhaustive list of the plants that can be successfully treated with the composition of the invention is presented below.

Fruit-bearing plants (drupaceous, pomes), such as citrus, olive, fig, vines, pomegranate, pine and chestnut trees;
flowering plants, such as rose, sunflower, Lily of the Nile, anemone, geranium, hydrangea, violet, daisy, cyclamen, begonia, bougainvillea, ranunculaceae, chrysanthemum, wisteria, Erica, hibiscus, lily, lilium, tulip, lavender, sterlizia, calla lily, orchid, mimosa, pothos, ruscus, pittosporums and ornamental plants;
vegetables such as tomato, aubergine, peppers, shallots, lettuce, leek, celery, cabbage, cauliflower, cucumber, pumpkin, courgette, melon, watermelon, strawberry, raspberry, bilberry, beans, peas, lentils, chick peas, radishes, spinach, broad beans, maize, wheat, artichoke, cardoon, beetroot, basil, sage, parsley, rosemary, garlic and onion.

## Claims

1. A composition for the treatment of plants, consisting of a mixture of active ingredients of natural origin, said mixture comprising:
- at least one substance having antibiotic activity, selected from the various types of garlic;
- at least one substance having fungicidal and/or repellent activity against plant infesting organisms, selected from the various types of hot pepper; and
- at least one vegetable oil, selected from the group comprising: olive oil and/or rape oil and/or sunflower oil and/or corn oil and/or pumpkin seed oil and/or mixed seed oils and/or mixtures thereof;
said composition also comprising an effective amount of an emulsifying agent selected from the group comprising of whole egg and/or egg yolk, fresh and/or in powder form, either freeze-dried or non-freeze-dried.

2. The composition as per claim 1, wherein in said composition olive oil is selected from olive oil and/or rape oil and/or sunflower oil and/or mixed seed oil and/or mixtures thereof; more preferably, from rape oil and/or mixed seed oil and/or mixtures thereof.

3. The composition as per any of the preceding claims, wherein said composition takes the form of a final oil-in-water concentrated emulsion and wherein in said mixture of active ingredients:
- the amount of garlic falls between 10 and 300 g per litre of final concentrated emulsion;
- the amount of hot pepper falls between 10 and 300 g per litre of final concentrated emulsion;
- the amount of vegetable oil falls between 25 and 300 g per litre of final concentrated emulsion.
and wherein the amount of egg falls between 1/5 of a whole egg and 5 eggs per litre of final concentrated emulsion.

4. The composition as per claim 3, wherein in said mixture of active ingredients:
- the amount of garlic falls between 10 and 200 g per litre of final concentrated emulsion; preferably between 20 and 80 g/l, more preferably between 25 and 70 g/l and even more preferably between 30 and 60 g/l;
- the amount of hot pepper falls between 1C and 200 g per litre of final concentrated emulsion; preferably between 20 and 80 g/l, more preferably between 25 and 70 g/l and even more preferably between 30 and 60 g/l;
- the amount of vegetable oil falls between 50 and 210 g per litre of final concentrated emulsion; preferably between 70 and 150 g/l, more preferably between 85 and 125 g/l; and wherein the amount of egg falls on average between
the content of 1/4 of a whole egg and that of 3 eggs per litre of final concentrated emulsion; preferably between the content of 1/3 of a whole egg and that of 2 eggs/l.

5. The composition as per claims 3 and 4, wherein in said mixture of active ingredients:
- the amount cf garlic falls between 50 and 180 g per litre of final concentrated emulsion;
- hot pepper is present in a amount of between 50 and 180 g per litre of final concentrated emulsion;
- the amount of vegetable oil falls between 90 and 210 g per litre of final concentrated emulsion.
and wherein the amount of egg falls between 1/3 of the content of a whole egg and that of 1 egg per litre of final concentrated emulsion.

6. The composition as per any of the preceding claims, further including an effective amount of at least one disinfectant and/or antibacterial additive, selected from the group comprising silver, preferably in the form of metallic silver and/or colloidal silver, basic copper acetate, sulphur, lime and limewash; preferably metallic silver or colloidal silver.

7. The composition as per any of the preceding claims, with the further addition of an effective amount of one or more adjuvant additives selected from the group of balsamics and/or antiseptics, eucalyptus, berries and/or leaves and/or essential oil thereof, thyme, neem; urticating substances, black and/or pink and/or white pepper; strengtheners, life improvers, purifiers, neem, Bach flowers.

8. A process for the preparation of a composition as per any of the preceding claims, including at least one stage wherein the mixture of said active ingredients is dispersed/dissolved in a water-based liquid base, containing the additional substances pursuant to claims 6 and 7, that is then emulsified.

9. The process as per claim 8, wherein said water-based liquid phase, containing the additional substances pursuant to claims 6 and 7, is a tisane obtained from boiling said additional substances in water for 15 minutes to 2 hours and then filtering the whole once cooled.

10. The process as per claims 8 and 9, wherein said emulsifying treatment is carried out using an effective amount of egg as per claims 1 to 5.

11. Use of a composition as per any of the claims 1 to 7, for the preventive and/or therapeutic treatment of plants and/or crop grounds against the attack by harmful infesting agents and/or organisms.

12. The use as per claim 9, to strengthen the natural defences of the plants and to promote the growth thereof.

13. A preventive and/or therapeutic treatment for plants and/or crop grounds against the attack by harmful infesting agents and/or organisms and/or to strengthen their natural defences and promote the growth thereof, essentially comprising at least one stage wherein to said plants and/or crop grounds is administered an effective amount of a composition as per any of the claims 1 to 7.
